# EUROPÄISCHE PATENTSCHRIFT

(11) **EP 0 972 556 B1**
(45) Veröffentlichungstag und Bekanntmachung des Hinweises auf die Patenterteilung: **22.12.2004**
(21) Anmeldenummer: 99113408.1
(22) Anmeldetag: 12.07.1999
(51) Int. Cl.: B01D 53/14

(54) **Adsorption von hydrophoben Gaskomponenten und/oder Aerosolen aus einer Gasphase**
Adsorption of hydrophobic gaseous compounds and /or aerosols from a gas
Adsorption des composés gazeux hydrophobes et/ou aérosols d'un courant gazeux

(30) Priorität: 14.07.1998 DE 19831507
(43) Veröffentlichungstag der Anmeldung: 19.01.2000
(73) Patentinhaber: Climarotec Gesellschaft für raumklimatische Spezialanlagen mbH, 61350 Bad Homburg (DE)
(72) Erfinder: Dierssen, Jens, Dr., Diplomchemiker, 61350 Bad Homburg (DE); Schnittker, Heinz-Peter, 68649 Gross-Rohrheim (DE)
(74) Vertreter: Kasche, André

(56) Entgegenhaltungen:
- WO-A-91/01794
- US-A- 3 593 496
- US-A- 5 378 264
- 'Römpp Lexikon Chemie. 10. Auflage. Band 1', 1996, GEORG THIEME VERLAG, STUTTGART

## Beschreibung

### Technisches Gebiet

Die vorliegende Erfindung betrifft Verfahren und Methoden zur Adsorption von hydrophoben Gaskomponenten und/oder Aerosolen aus einer Gasphase mittels eines schwebefähigen und mit Tensiden angereicherten Flüssigkeitsnebels sowie die Verwendung dieses Flüssigkeitsnebels zur Adsorption von hydrophoben Gaskomponenten und/oder Aerosolen. Die Bindung der Gaskomponenten und/oder der Aerosole erfolgt über die physikalische Adsorption an Tenside auf der Oberfläche der Flüssigkeitsnebeltropfen.
Der Gegenstand der Erfindung findet Anwendung in weiten Bereichen der Verfahrenstechnik, der Produktion und der Abgasreinigung. Insbesondere findet die vorliegende Erfindung Anwendung bei der Abluftreinigung.

### Stand der Technik

Im folgenden wird beispielhaft der Stand der Technik zur Entfernung von Gaskomponenten sowie Aerosolen aus der Gasphase beschrieben.
Hydrophobe Gaskomponenten und Aerosole werden derzeit durch separate Verfahren aus der Umgebungsluft entfernt und werden daher getrennt abgehandelt. Allgemein können gasförmige Abluftbestandteile durch Abkühlung bzw. durch Druckerhöhung kondensiert werden, in einem Waschmedium absorbiert werden (physikalische Absorption), mit geeigneten Verbindungen chemisch umgesetzt werden (chemische Absorption), an porösen Substanzen wie Aktivkohle adsorbiert oder katalytisch bzw. thermisch oxidiert werden.
Ziel der beiden Absorptionsverfahren ist die Anreicherung der auszuwaschenden Verbindung im Waschmedium. Hierzu wird das zu reinigenden Abgas mit der Waschflüssigkeit in Kontakt gebracht, um einen guten Stoffübergang zwischen den Phasen zu erreichen. Bei der physikalischen Absorption wird der zu reinigende Stoff im Waschmedium gelöst, während es bei der chemischen Absorption zu einer Reaktion zwischen dem Waschmedium und dem zu entfernenden Stoff kommt. Bei der physikalischen Absorption kann die beladene Waschflüssigkeit durch Rektifikation oder Strippen regeneriert werden. Die abgeschiedenen Komponenten können in konzentrierter Form zurückgewonnen werden. Auch die Absorption organischer Verunreinigungen, die schlecht wasserlöslich sind, ist heute mit Hilfe organischer Lösungsmittel möglich. Bei der chemischen Absorption reagieren die aus dem Abgas zu entfernenden Stoffe mit der Waschflüssigkeit unter Bildung von Reaktionsprodukten, die nicht oder nur gering flüchtig sind. Die Waschflüssigkeit wird durch die Reaktion mit dem aufgenommenen Stoff verbraucht. Je nach Anwendungsfall kann eine Regeneration oder Entsorgung erfolgen.
Meistens ist es wünschenswert, nur einen geringen spezifischen Anteil eines großen Gasvolumens durch die spezifische Bindung an absorbierende Flüssigkeiten zu entfernen. Beispielhaft sei hier auf die notwendige Abluftreinigung bei vielen technischen Verfahren hingewiesen sowie bei der Verarbeitung von Brennstoffen oder auch bei der Reinigung von Faulgasen, wie sie bei der Abwasseraufbereitung entstehen. Bei der Entfernung spezifischer Gaskomponenten aus einer Gasphase spielt neben der Affinität beider Reaktionspartner in der Flüssigkeits- und in der Gasphase sowie der Stabilität des möglichst irreversibel gebildeten Produkts insbesondere die Kontaktfläche beider Phasen zueinander eine entscheidende Rolle. Die Problematik einer ausreichenden Kontaktfläche zwischen der Gas- und der Flüssigkeitsphase wird derzeit technisch durch sogenannte Waschtürme, Gaswäscher oder Besprühen gelöst.
In diesen technischen Vorrichtungen durchläuft das zu behandelnde Gasgemisch eine Absorptionsflüssigkeit oder aber das Gas wird mittels Düsen mit der Flüssigkeit besprüht. In beiden Ausführungsformen wird die notwendige Reaktionsfläche zwischen beiden Phasen erhöht. Derzeit gebräuchliche Gaswäscher verwenden Sprühstrahlen aus Absorberflüssigkeit mit einer mittleren Tropfengröße von mehr als µm Durchmesser. Diese Tropfengröße entspricht im besten Fall einem tropischen Sprühregen mit einem mittleren Durchmesser von mehr als. 50 bis 100 µm. In diesen auch Rieseltürme" genannten Vorrichtungen fallen abreagierte und unreagierte Absorbertropfen der Schwerkraft folgend zu Boden. Um den absorptionsfähigen Zeitraum der Absorbertropfen zu verlängern werden diese Rieseltüme entsprechend hoch dimensioniert und gegebenenfalls ein Luftgegenstrom verwendet, der der Schwerkraft entgegenwirkt und durch Verwirbelung für Durchmischung sorgt. Die derzeitig verwendeten Gaswäscher" setzen einen großen Überschuß an Absorberflüssigkeiten ein, die bis zur ausreichenden Sättigung mit den Gaskomponenten oft mehrfach verwendet werden müssen. Trotz entsprechend großer Dimensionierung solcher Gaswäscher ist der Wirkungsgrad in Bezug auf die Vollständigkeit der Entfernung der Gaskomponente und/oder der Ausnutzung der eingesetzten Absorberflüssigkeitskapazität und Menge meist ungenügend.
Als Staub bezeichnet man ein Kollektiv fester Teilchen im Korngrößenbereich unter 200 µm.
Träger von Industriestäuben ist meist das bei einem Prozeß entstehende Abgas oder die zur Staubabsaugung notwendige Luft. Bei Verbrennungsprozessen entsteht Staub in Form von Rauch und Flugasche. Die Korngröße von Rauch liegt meist in Größenordnungen von 0,01 bis 1 µm, die von Flugasche bei 1 bis 100 µm. Unter dem Begriff Aerosol werden im industriellen Bereich Feststoff- oder Flüssigkeitsteilchen zusammengefaßt, die in einem Gas- oder Luftstrom durch Kondensation, Sublimation oder durch chemische Reaktion entstehen und mittlere Größen von 10 oder weniger µm Durchmesser, meist 3 bis unter 1 µm, aufweisen. Der Begriff Aerosol umfaßt aber auch biologisches Material wie Pilzsporen, Bakterien und Viren, die z.B. in großen Mengen beim Sieben und Umschichten von organischem Material (Grünschnittdeponie, Kompostierung) freigesetzt werden.
Ein typisches Reaktionsaerosol ist Ammoniumchlorid, das bei der Reaktion von gasförmigem HCl und NH₃ entsteht. Sublimationsaerosole können beispielsweise bei Schmelzprozessen auftreten. Erreicht die Aerosolkonzentration einen Grad, bei dem die Dispersion sichtbar wird, spricht man auch von Nebel (flüssig in Luft) oder Rauch (fester Luft). Staubpartikel eines bestimmten Typs sind nicht immer einheitlich groß, sondern können jeweils eine bestimmte Größenverteilung haben. Neuere Untersuchungen schenken gerade dem Feinstaub (Korngrößenbereich < 10 µm) erhöhte Aufmerksamkeit, da man annimmt, daß er aufgrund seiner großen spezifischen Oberfläche adsorptiv gasförmige Stoffe aus der Luft bindet. Die technischen Vorrichtungen zur Staubabscheidung lassen sich nach dem Trennprinzip in vier Gruppen einteilen:
Massenkraftabscheider, filternde Abscheider, elektrische Abscheider und Naßabscheider.
Für den Stand der Technik ist hier einzig der Naßabscheider von Bedeutung. Da in vielen Fällen die an den einzelnen Staubteilchen angreifenden Massenkräfte in Folge der kleinen Masse der Staubteilchen nicht ausreichen um die Partikel aus einem Gas-Staub-Gemisch zu entfernen, wird versucht, die Staubteilchenmasse durch Bindung an Flüssigkeitstropfen zu vergrößern. Des weiteren haften Staubpartikel an bespülten Oberflächen wesentlich besser als an trockenen. Diese Überlegung führten zu Entstaubungssystemen der sogenannten nassen Bauarten", wie z.B. Naßzyklone, Naßgewebe- oder Naßfaserfilter und Naßelektrofilter. Eine exakte Abgrenzung des Naßentstaubers gegenüber anderen Abscheidesystemen ist nicht möglich. Bei den weiteren Ausführungen sollen unter dem Begriff Naßentstauber" ausschließlich diejenigen Geräte verstanden werden, bei denen die Waschflüssigkeit Voraussetzung für deren Funktionstüchtigkeit ist, nicht deren Chemie. Die Naßabscheidung besteht im Prinzip aus drei Vorgängen:
Die im Gas befindlichen Staubpartikel werden mit den erheblich größeren Wassertropfen in Kontakt gebracht.
Die Staubteilchen werden auf den Tropfen festgehalten und mit den Tropfen zusammen mittels mechanischen Tropfenabscheidern, wie Prallblechen, Lamellenabscheidern oder Zyklonen, aus dem Gasstrom abgetrennt.
Das entscheidende Problem der Naßabscheidung ist das Zustandekommen eines Kontakts der Staubteilchen mit den Tropfen. Dabei geht die Vorstellung dahin, daß die Staubpartikel bei der Umströmung eines Tropfens dem Gasstrom nicht mehr folgen können, sondern infolge ihrer Massenträgheit auf den Tropfen geschleudert werden.
Neben dem Durchmesser und der Dichte der Staubteilchen ist auch der im Wäscher erzeugte Tropfendurchmesser, die Anzahl der Tropfen und die Relativgeschwindigkeit der Tropfen zu den Staubteilchen für die Abscheideleistung maßgeblich. Nach der strömungstechnischen Konzeption der Naßabscheider lassen sich vier Grundtypen erkennen:
Waschturm, Füllkörper- und Bodenkolonnen,
Injektor- oder Strahlwäscher,
Rotationszerstäuber,
Venturi-Wäscher.

Von großer Bedeutung beim Einsatz von Naßwäschern ist die Abwasserfrage. Zunächst macht man mit einem Naßwäscher nichts anderes, als ein Staubproblem von der Luft ins Wasser zu verlagern. Die notwendige Aufarbeitung des Waschwassers ist bei Feinstäuben, die in den relativ kleinen Wasservorlagen der Abscheider kaum sedimentieren können, oft weitaus aufwendiger als die eigentliche Abscheidung der Stäube aus der Abluft. Vielfach ist der Betrieb von Naßwäschem zur Feinstaubabscheidung nur in Verbindung mit ohnehin zur Verfügung stehenden Abwasserreinigungsanlagen sinnvoll.
Bei allen genannten Anwendungen zeigt sich, daß die Qualität der Wechselwirkung zwischen den Aggregatzuständen des Ad- bzw. Absorbermediums und der zu ab- bzw. adsorbierenden Komponente eine verfahrenstechnisch entscheidende Rolle spielt. Von gleicher Wichtigkeit ist die Affinität zwischen dem Ad- bzw. Absorbermaterial und der zu ad- bzw. absorbierendem Gaskomponente oder Aerosol. Gerade wenig reaktive, unpolare, hydrophobe, meist organische Gaskomponenten sowie die feinen Aerosole (meist Rauch) stellen bei der Abluftreinigung nach wie vor ein Problem dar. Es ist zu bedenken, daß viele dieser Komponenten auch in kleinsten Konzentrationen oft noch eine starke Geruchsbelästigung auslösen.

In den meisten der oben genannten Reinigungsverfahren stellen unpolare hydrophobe Gaskomponenten und Feinststäube wie Aerosole und Rauch ein ungelöstes Problem dar, da sie mit den meistens verwendeten polaren, wässrigen Lösungsmitteln keine Verbindung eingehen bzw. in ihnen nicht gelöst werden können. Der technische Aufwand (die Apparaturen) und die Menge an belastetem Lösungsmittel steht immer in krassem Verhältnis zu den meist geringen Mengen an absorbierten bzw. adsorbierten Material.

US 5,378,264 offenbart einen wässrigen Tropfenabscheider, der organische Verunreinigungen aus Abluft mittels einer Waschflüssigkeit, die organische Tenside enthält, als Öl-in-Wasser Mikroemulsion abscheidet, wobei die Waschflüssigkeit als Spray, d.h. im Sinne fallender Tropfen, in die Abluft eingebracht wird.

Die Aufgabe der vorliegenden Erfindung war somit die Optimierung der Wechselwirkung zwischen Absorberflüssigkeit bzw. Adsorptionsmittel und der zu beseitigenden hydrophoben Gaskomponente bzw. dem Aerosol. Gesucht war ein Verfahren, das auch kleine und geringste Konzentrationen von hydrophoben Gaskomponenten und/oder Aerosolen mit einer bisher nicht erreichbaren Effizienz aus einer Gasphase abtrennt und sich durch hohe Effizienz, geringe bauliche Maßnahmen und einen kostengünstigen Betrieb auszeichnet.

### Darstellung der Erfindung und bevorzugter Ausführungsformen

Die Aufgabe der vorliegenden Erfindung konnte im Rahmen der Beschreibung und der Patentansprüche gelöst werden.
Die vorliegende Erfindung stellt nun erstmals ein Verfahren zur Verfügung zur Adsorption von hydrophoben Gaskomponenten und/oder Aerosolen aus einer Gasphase mittels schwebefähigen Flüssigkeitstropfen, das dadurch gekennzeichnet ist, daß die Ausbringung eines mit geeigneten Tensiden versehenen und schwebefähigen Flüssigkeitsnebels in den zu behandelnden Reaktionsraum erfolgt,
und die zu bindende hydrophoben Gaskomponenten und/oder die Aerosole an den Tensiden auf der Oberfläche der Flüssigkeitsnebeltropfen adsorbiert wird, und
wobei Flüssigkeitsnebeltropfen mit einem Tensidanteil von 0,01 bis 2 Promille, vorzugsweise 0,1 bis 2 Promille in der Gesamtvorlage Wasser verwendet werden.

Das erfindungsgemäße Verfahren bietet überraschenderweise eine Reihe von Vorteilen und unerwartete Anwendungsmöglichkeiten wie z.B. eine derart effiziente Entfernung geruchsintensiver, hydrophober, organischer Gaskomponenten aus Abluft, daß diese Komponenten oft nicht einmal mehr durch die hochempfindliche menschliche Nase in der so gereinigten Abluft erkannt werden können.

Von besonderer Bedeutung für die Durchführung des erfindungsgemäßen Verfahrens ist die Ausbringung der flüssigen Adsorberkomponente als schwebefähiger Flüssigkeitsnebel. Zum einen führt die Verwendung eines schwebefähigen Feinstnebels als flüssiger Adsorptionsmittelträger zu einer starken Vergrößerung der adsorptionsaktiven Oberfläche (Bild 1, Oberflächenerhöhung bei feinem Nebel), zum anderen zur starken Verringerung des mittleren Tropfenabstands (Bild 2). Dies resultiert in sehr kurzen freien Weglängen zwischen den Adsorptionsoberflächen der einzelnen Nebeltröpfchen. Gerade diese Tatsache ist von besonderer Bedeutung im Hinblick auf die geringe Diffusionsgeschwindigkeit größerer organischer, hydrophober Gaskomponenten bzw. Aerosolen. Die in Bild 1 und 2 dargestellten Eigenschaften eines schwebefähigen Flüssigkeitsnebels bewirken in Kombination mit einer mittels Tensiden erzeugten adsorptiven Oberfläche der einzelnen Feinsttröpfchen eine unerwartet effiziente Reinigungswirkung für hydrophob/organisch oder biologisch belastete Abluft.

Die Orientierung der adsorbierenden Tenside an der Oberfläche der Oberfläche der Nebeltröpfchen nimmt einige wenige Sekunden in Anspruch. Es ist daher notwendig, die gewünschte Tropfenform und -größe eine Zeit lang zu erhalten, um so den erfindungsgemäßen Effekt (die ungewöhnlich hohe Effizienz der Adsorption) optimal zu nutzen. Die erfindungsgemäße Effizienz ist mit derzeit gebräuchlichen Gas- und Aerosol-(Rauch)-wäschern mit Adsorbertropfen in Regentropfengröße nicht zu erreichen. Auch das Durchleiten der zu reinigenden Abluft als Gasblasen durch tensidhaltige Flüssigkeit ist zu ineffizient, um eine Anwendung zu finden. Das Problem des Durchleitens liegt in der mangelnden Diffusionsgeschwindigkeit mittlerer und großer organischer Moleküle und Aerosole innnerhalb der Gasblasen. Die Verwendung eines schwebefähigen Flüssigkeitsnebels im Sinne der Erfindung ist daher nicht nur vorteilhaft sondern entscheidend für die gewünschte Effizienz. Die unerwartet hohe Effizienz ermöglicht nun, Adsorptionsmittel (Tenside) und zu beseitigende Gaskomponenten in erheblich optimierter Stöchiometrie zueinander einzusetzten, im Idealfall bis nahezu 1:1. Diese hohe Effizienz resultiert in erheblich geringerer technischer Dimensionierung der notwendigen Anlagen und reduziert den notwendigen und entsorgungsaufwendigen Adsorptionsmittelüberschuß wie er bisher bei Anlagen und Verfahren verwendet wurde auf ein bisher nicht bekanntes Minimum.

Der Ausdruck schwebefähiger Flüssigkeitsnebel" im Sinne der vorliegenden Erfindung bezieht sich auf eine Tropfengröße, die eine Fallgeschwindigkeit von 20 oder weniger cm pro Minute bei Atmosphärendruck in der unbewegten Luft bzw. Gasphase bedingt. In einer bevorzugten Ausführungsform umfasst die Erfindung ein erfindungsgemäßes Verfahren, das dadurch gekennzeichnet ist, daß der schwebefähige Flüssigkeitsnebel eine Fallgeschwindigkeit von 10 oder weniger cm pro Minute bei Atmosphärendruck in der unbewegten Luft bzw. Gasphase aufweist. Dies ist vergleichbar mit den natürlichen Wolken oder Bodennebel aus Wassertröpfchen.
Ein solcher schwebefähiger Nebel entsteht unterhalb einer mittleren Tropfengröße von 50 µm Durchmesser. Eine mittlere Tropfengröße mit einem Durchmesser von 1 bis 30 µm ist bevorzugt. In einer besonders bevorzugten Ausführungsform bezieht sich die vorliegende Erfindung auf Verfahren, die dadurch gekennzeichnet sind, daß ein schwebefähiger Flüssigkeitsnebel mit einer mittleren Tropfengröße von 1 bis 50 µm verwendet wird.
Mit Hochdruckdüsen technisch realisierbar sind mittlere Tropfengrößen von 10 - 20 µm.
Deshalb betrifft die vorliegende Erfindung in einer ganz besonders bevorzugten Ausführungsform erfindungsgemäße Verfahren, die dadurch gekennzeichnet sind, daß ein schwebefähiger Flüssigkeitsnebel von mit mittleren Tropfengrößen von 10 bis 20 µm verwendet wird.
Die Schwebefähigkeit des Adsorbernebels erhöht die Verweildauer im Reaktionsraum gegenüber den herkömmlichen Rieseltürmen um ein Vielfaches.

Der Begriff Reaktionsraum" im Sinne der Erfindung ist als jedes beliebiges räumlich abgeschlossenes oder offenes Reaktionsgefäß im verfahrenstechnischem Sinne zu verstehen. Der Reaktionsraum grenzt den Bereich in dem die Adsorption, also die Anlagerung der unpolaren hydrophoben Stoffe an die mit Tensiden belegten Wassernebeltröpfchen, erfolgt ab. Unter einem Reaktionraum kann der Fachmann z.B. einen verfahrenstechnischen offenen oder geschlossenen Kesselreaktor oder auch ein Strömungsrohr verstehen.
Das erfindungsgemäße Verfahren hat auch den Vorteil, daß, bedingt durch die geringe Tropfengröße, viel weniger Adsorberflüssigkeit an den Gefäßwänden abgesondert wird als in herkömmlichen Rieseltürmen. Die Verringerung der eingesetzten Adsorberflüssigkeit durch die bereits erwähnte vorteilhafte Stöchiometrie sowie deren Schwebefähigkeit erlaubt nun eine wesentlich geringere Dimensionierung der technischen Anlagen zur Gasadsorption. Während Rieseltürme im reaktionstechnischen Sinne Kesselreaktoren in länglicher vertikaler Ausführung darstellen, sind nun adsorptionsfähige horizontale Strömungsrohre möglich, in denen sich der Adsorbernebel zusammen mit der Gaskomponente bewegt. Die reaktionstechnischen Vorteile solcher Strömungsrohre (Plug-Flow-Reaktoren) sind in der einschlägigen Literatur zur technischen Reaktionsführung beschrieben und werden daher hier nicht weiter ausgeführt. In einer weiteren bevorzugten Ausführungsform betrifft die vorliegende Erfindung erfindungsgemäße Verfahren, die dadurch gekennzeichnet sind, daß die mittels schwebe- und adsorptionsfähiger Flüssigkeitsnebeltropfen zu behandelnde Gasphase in gerichteter Bewegung ist.
Besonders vorteilhaft ist es im reaktionstechnischen Sinne für das erfindungsgemäße Verfahren wenn der Reaktionsraum ein Strömungsrohr im verfahrenstechnischen Sinne darstellt. In einer weiteren besonders bevorzugten Ausführungsform betrifft die vorliegende Erfindung erfindungsgemäße Verfahren, die dadurch gekennzeichnet sind, daß der Reaktionsraum ein Strömungsrohr im verfahrenstechnischen Sinne darstellt.
Neben der durch die Fall- und/oder Strömungsgeschwindigkeit bedingten Durchmischung der Gas- / Aerosol- und Nebelkomponenten ermöglicht eine zusätzliche Durchmischung, z.B. durch Verwirbelung, eine weitere Steigerung der Adsorptionsgeschwindigkeit durch die verbesserte Durchmischung und kinetische Beschleunigung der Adsorption. In einem weiteren bevorzugten erfindungsgemäßen Verfahren betrifft die Erfindung somit Verfahren, die dadurch gekennzeichnet sind, daß eine zusätzliche Verwirbelung des schwebefähigen und adsorptiven Flüssigkeitsnebels zu einer Steigerung der Reaktionsgeschwindigkeit und des Wirkungsgrads führt. Durch optimierte Ausbringung des Adsorbernebels mittels spezieller Hochdruck-Feinstnebeldüsen in die zu reinigende Luftmasse kann in einem weiteren bevorzugten erfindungsgemäßen Verfahren eine Steigerung der Reaktionsgeschwindigkeit erreicht werden.

Hydrophobe Gaskomponenten und/oder Aerosole im Sinne der Erfindung sind alle Stoffe, die nicht in flüssiger Phase mit Wasser frei mischbar sind. Der Begriff "Aerosol" umfaßt Feststoff- und Flüssigkeitsteilchen, die z.B. in einem Gas- oder Luftstrom durch Kondensation, Sublimation oder durch chemische Reaktion entstehen und mittlere Größen von 10 oder weniger µm Durchmesser aufweisen.

Der Begriff "Adsorption" im Sinne der Erfindung bezieht sich auf die Anlagerung hydrophober Gaskomponenten und/oder Aerosole an eine tensidisch belegte hydrophobe Oberfläche eines wässrigen Flüssigkeitsnebeltropfchens. Die Flüssigkeitsnebeltropfen der Erfindung sind dadurch gekennzeichnet, daß es nach der Zugabe einer geeigneten Menge eines geeigneten Tensids in die wässrige also polare Vorlage und anschließende Feinstvernebelung der wässrigen Tensidlösung rasch zu einer Orientierung der zugegebenen Tenside an die Oberfläche der erzeugten Feinstnebeltropfen kommt (Bild 3). Der polare, hydrophile Teil des Tensidmoleküls (2) verbleibt in der polaren wässrigen Phase des Tropfen, der unpolare hydrophobe Teil (3) streckt sich von der Oberfläche des Tropfen heraus in die Umgebungsluft (Bild 3).
Dieser gewünschte Effekt ist durch die Auswahl der hierfür geeigneten Molekülstruktur eines Tensids optimierbar. Als besonders vorteilhaft erweisen sich hier sterisch gehinderte hydrophobe Ketten.
Der wässrige polare Flüssigkeitstropfen sollte im optimalen Zustand (bei geeigneter Tensidkonzentration) eine nahezu vollständig mit unpolarem hydrophobem Material belegten Oberfläche aufweisen. Eine geeignete Konzentration an Tensiden in den Nebeltropfen zur optimal tensidbelegten Oberfläche ist abhängig sowohl von der Tropfengröße als auch von dem verwendeten Tensid. Der verwendbare Konzentrationsbereich der Tenside richtet sich nach dem "Wasserverbrauch" des hydrophilen Anteils oder der räumlichen Ausdehnung des hydrophoben Anteils der amphiphilen Tenside. Ein Fachmann kann diesen geegneten Konzentrationbereich ohne großen Aufwand durch einen simplen Reihenversuch für eine konstante Tropfengröße selber bestimmen.
Der erfindungsgemäße Effekt der hydrophob belegten schwebefähigen Nebeltropfen erzeugt eine starke Adsorptionsfähigkeit des verwendeten Nebels für unpolare hydrophobe Gase bzw. Aerosolkomponenten (6) in der Umgebungsluft (Bild 3). Durch Anpassung des nichtionischen Teils des Tensides an bestimmte organische Gasmoleküle bzw. Aerosole ist eine Optimierung der Adsorptionsfähigkeit des Adsorptionsnebels möglich. Die nun an der Oberfläche des Nebeltropfens angelagerten, somit aus der Gasphase entfernten, unpolaren Moleküle oder Aerosole, verbleiben an den Tensidmolekülen. Der erfindungsgemäße Absorbernebel kann zu zusätzlichen Absorption von pH-aktiven Gaskomponenten mit einer Säure oder Lauge angereichert werden. Dies bedeutet zusätzlich eine Pufferung bzw. Stabilisierung des gesamten Absorbersystems.
Die aufgeführten Ausführungsbeispiele von Gaskomponenten organischer, unpolarer hydrophober Art (6), gelten in gleicher Weise für Aerosole (Feinststäube, Rauch, Flüssigkeitstropfen unter 10 µm), insbesondere solche, welche durch Belegung mit organischem Material eine sehr schlechte Absorptionseigenschaft in wässrigen Naßabsorbern herkömlicher Bauart aufweisen.
Die verbrauchten" Flüssigkeitsnebeltropfen können nach geeigneter Kontaktzeit an einem Filtermaterial (Demister) abgeschieden werden. Das adsorbierte Material befindet sich dann im Ablauf des Nebelabscheiders, also in wässrig tensidischer Lösung. In diesem Fall handelt es sich um eine Adsorption mit anschließender physikalischer Absorption von Gaskomponenten bzw. Aerosolen. In einer weiteren Ausführungsform betrifft die vorliegende Erfindung erfindungsgemäße Verfahren, die dadurch gekennzeichnet sind, daß die mit hydrophoben Gaskomponenten und/oder Aerosolen beladenen Flüssigkeitstropfen anschließend an einem Nebelabscheider abgeschieden werden.
Des weiteren kann der beladene Tensidnebel auch über freiem Gelände ausgesetzt bzw. nach geeigneter Kontaktzeit in einem Reaktionsraum in die freie Atmosphäre entlassen werden. Da der Stand der Technik eine ganze Fülle von Tensiden zur Verfügung stellt, die toxikologisch unbedenklich und biologisch abbaubar sind, betrifft die vorliegende Erfindung in einer ganz besonderen Ausführungsform erfindungsgemäße Verfahren, die dadurch gekennzeichnet sind, daß die mit hydrophoben Gaskomponenten und/oder Aerosolen beladenen Flüssigkeitstropfen anschließend in die freie Atmosphäre entlassen werden.
Hierbei kommt es zu einer Verdunstung der Wassertropfen, auf dessen äußerer Hülle sich die Tenside mit dem absorbiertem Material befinden. Die Verdunstungsrate eines mit Tensiden ummantelten Wasser-Nebeltröpfchens ist geringer als die reiner Wassertröpfchen, was die Lebensdauer des Feinstnebels im Sinne des Verfahrens positiv erhöht.

Auch in diesem Fall handelt es sich um eine Adsorption mit anschließender physikalischer Absorption. Nach Verlust von polaren Wasser aus dem Kern durch Verdunsten kommt es zu einer Umorientierung der Oberflächentenside (11,13,14,15) (Bild 4). Die Tenside lagern sich nun um die noch vorhandenen zuvor adsorbierten unpolaren Moleküle, d.h. sie bilden im klassischen Sinne eine Mizelle um das hydrophobe unpolare Material (13,15). Es verbleibt lediglich ein monomolekularer Wasserfilm um die neu gebildete Mizelle. Auch hier liegt nun eine physikalische Absorption vor. Hier zeigt sich besonders deutlich der Vorteil des erfindungsgemäßen Verfahrens gegenüber herkömmlichen Naßverfahren. Zum einen wurde die Naßkomponente in minimalen Umfang eingesetzt, zum anderen kann durch Verdunstung die Menge des beladenen (belasteten) Restmaterials bis auf eine Restfeuchte reduziert werden.
Eine Geruchswahrnehmung der zuvor adsorbierten Gaskomponenten oder Aerosole ist meist nicht mehr möglich, da sie sich im Inneren eines großen Molekülverbundes (Mizelle) befinden. Das Verfahren erweist sich auf Grund seiner unerwartet hohen Effizienz für besonders geeignet, geruchsbelästigende Gaskomponenten aus der Umgebungsluft zu entfernen. Hier sei beispielhaft die Geruchsbelästigung durch Tierhaltung in der Landwirtschaft, bei Verbrennungsprozessen und bei der Abwasseraufarbeitung durch Kläranlagen erwähnt. In einer besonderen Ausführungsform betrifft die vorliegende Erfindung daher erfindungsgemäße Verfahren, die dadurch gekennzeichnet sind, daß die zu absorbierenden Gaskomponenten geruchsbelästigende Stoffe sind.

Der Begriff "Tensid" im Sinne der Erfindung umfasst amphiphile Substanzen, die als Lösungsvermittler für hydrophobe Substanzen in wässrigen Lösungsmitteln dienen.
Beispielhaft werden die folgenden Stoffgruppen für Tenside genannt: Polyole, anionenaktive Tenside, kationenaktive Tenside, amphotere Tenside, nichtionogene Tenside. Zudem sind Mischungen aller oben aufgezählten Tenside möglich.
Für die erfindungsgemäßen Verfahren können sowohl Einzeltenside aber auch Mischungen verschiedener Tenside verwendet werden. Mischungen sind besonders sinnvoll, wenn verschiedene Gaskomponenten bzw. Aerosole verschiedene Affinitäten zu einzelnen Tensiden aufweisen. Die vorliegende Erfindung betrifft daher erfindungsgemäße Verfahren, die dadurch gekennzeichnet sind, daß der schwebefähige Flüssigkeitsnebel mindestens ein Tensid oder eine Mischung mehrerer Tenside enthält.
Tenside (1) sind amphiphile Moleküle, die einen hydrophilen (2) und einen hydrophoben (3) Anteil besitzen. Tenside orientieren sich im Wasser an die Grenzfläche (4). Dabei ragt der hydrophile, polare Teil des Moleküls in das Wasser (5), während sich der unpolare hydrophobe Teil nach außen in die Gasphase orientiert (Bild 3).
Die Absoprtion der hydrophoben, meist organischen Gasmoleküle (6) geschieht in der Form, daß je nach Konzentration des Tensids (4), das organische Molekül an den hydrophoben Teil des monomeren Tensidfilms angelagert wird (adsorbiert) oder aber in einer besonderen Ausbildungsform anschließend in eine Mizelle eingebaut (10,11), das heißt solubilisiert wird (Bild 4). Beide Vorgänge binden in jedem Fall die zu bindenden hydophoben Substanzen.
Besonders geeignete Tenside zur Ausführung der vorliegenden Erfindung sind Tenside mit einem verzweigtem hydrophobem Teil. Dieser führt zu einer Erhöhung des sterischen Effekts.
Besonders vorteilhaft haben sich die folgenden und beispielhaft aufgelisteten Tenside zur Durchführung des erfindungsgemäßen Verfahrens erwiesen. Daher betrifft die Erfindung in einer bevorzugten Ausführungsform ein erfindungsgemäßes Verfahren, das dadurch gekennzeichnet ist, daß mindestens ein Tensid der Stoffgruppen: Fettalkoholpolyglykolether, Alkylphenolpolyglykolether, Fettsäurepolyglykolester, Fettsäureamidpolyglykol-ether, Fettsäurealkyloamide, Fettalkohol-Ethylenoxid-Propylenoxid-Addukte, Glycerid-Ethoxilate, Sorbitanester-Ethoxilate, APG-Alkylpolyglycoside oder Kombinationen davon verwendet wird.
Die Erfindung betrifft auch die oben genannten Tenside zur Verwendung in einem der zuvor genannten erfindungsgemäßen Verfahren.
Die Erfindung betrifft in einer bevorzugten Ausführungsform ein erfindungsgemäßes Verfahren, das dadurch gekennzeichnet ist, daß bevorzugt eines der folgenden Tenside bzw. eine Mischung der folgenden Tenside verwendet wird: Verzweigter C13 iso-Tridecylalkohol mit 9 Mol Ethylenoxid, verzweigter C9/C11-Fettalkohol mit 8 Mol Ethylenoxid, hydriertes Rizinusöl mit 40 Mol Ethylenoxid.
Die Erfindung betrifft ebenso die oben genannten Tenside zur Verwendung in einem der zuvor genannten erfindungsgemäßen Verfahren.
Eine geringe Menge des adsorptionsaktiven Tensids ist ausreichend. Da sich das verwendete Adsorptionsmaterial lediglich auf der Oberfläche eines Flüssigkeitstropfen befindet, also quasi auf einem Trägermaterial, reichen häufig Tensidzugaben von 0,01 bis 2 Promille in der Gesamtvorlage Wasser aus. Bereits bei leicht überhöhter Dosierung des Tensids kommt es zur Ausbildung von Tensidaggregaten (Mizellen) (12) im wässrigen Nebeltröpfchen (Bild 4). Diese Überdosierung führt zu keiner deutlichen Steigerung der Adsorptionseigenschaften des Tensidnebels. Diese Möglichkeit der geringen Dosierung stellt eine großen Vorteil dar, da der sparsame Verbrauch zu sehr günstigen Betriebskosten führt.

Besonders bevorzugt sind erfindungsgemäße Verfahren, die dadurch gekennzeichnet sind, daß Tensidzugaben von 0,1 bis 2 Promille in der Gesamtvorlage Wasser für die Herstellung der Flüssigkeitsnebeltropfen verwendet werden.
Die verwendeten Tenside stellen aufgrund der geringen Konzentration kein Entsorgungsproblem dar zumal sie häufig sehr gut biologisch abbaubar sind. Selbst die Ausbringung der Tenside in die freie Atmosphäre kann für viele Tenside als unbedenklich angesehen werden.
Ein weiterer Aspekt der vorliegenden Erfindung betrifft Methoden zur Adsorption von hydrophoben Gaskomponenten und/oder Aerosolen aus einer Gasphase gemäß einem der erfindungsgemäßen Verfahren.
Ein noch weiterer Aspekt der vorliegenden Erfindung betrifft die Verwendung eines mit geeigneten Tensiden versehenen schwebefähigen Flüssigkeitsnebels nach einem der erfindungsgemäßen Verfahren.

### Legenden zu den Abbildungen

- Bild 1:: Diagramm der Abhängigkeit der Oberfläche eines Flüssigkeitsnebels vom Tropfendurchmesser für 1 g Flüssigkeit / m³.
- Bild 2:: Diagramm der Abhängigkeit des mittleren Tropfenabstandes vom Tropfendurchmesser für 1 g Flüssigkeit / m³.
- Bild 3:: Schematische Darstellung eines erfindungsgemäßen Verfahrens, der Anlagerung unpolarer Stoffe an mit Tensidmolekülen bedeckten Wassertröpfenoberflächen.
1) Tensidmolekül
2) Ionisch hydrophiler Teil
3) Nicht ionisch hydrophober Teil
4) Oberflächenangelagerte Tensidmoleküle
5) Wassernebeltröpfchen (luftgetragen)
   5A) Wasseroberfläche
6) Organische Moleküle und / oder Aerosole in Luft
7) Reaktionszeit
8) angelagerte organische Moleküle
- Bild 4:: Schematische Darstellung eines erfindungsgemäßen Verfahrens.
A) Abtrocknender Wassernebeltropfen (mit Tensidmolekülen belegt) nach der Adsorption von Molekülen. Dargestellt ist ein Kreisausschnitt des Tropfens.
B) Abtrocknendes Nebeltröpfchen
C) Beginn der Bildung einer äußeren Mizelle
D) Wasser ist fast vollständig verdunstet

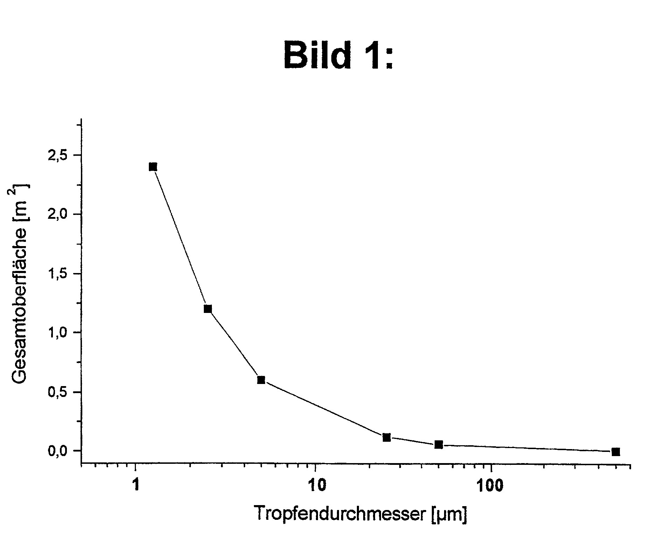

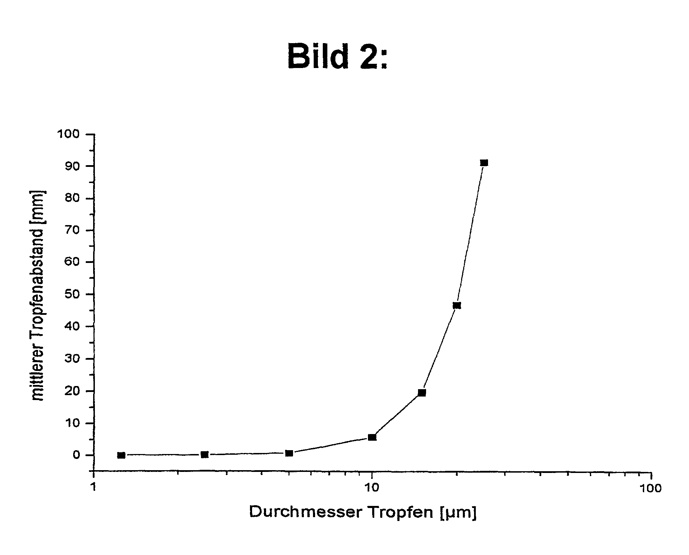

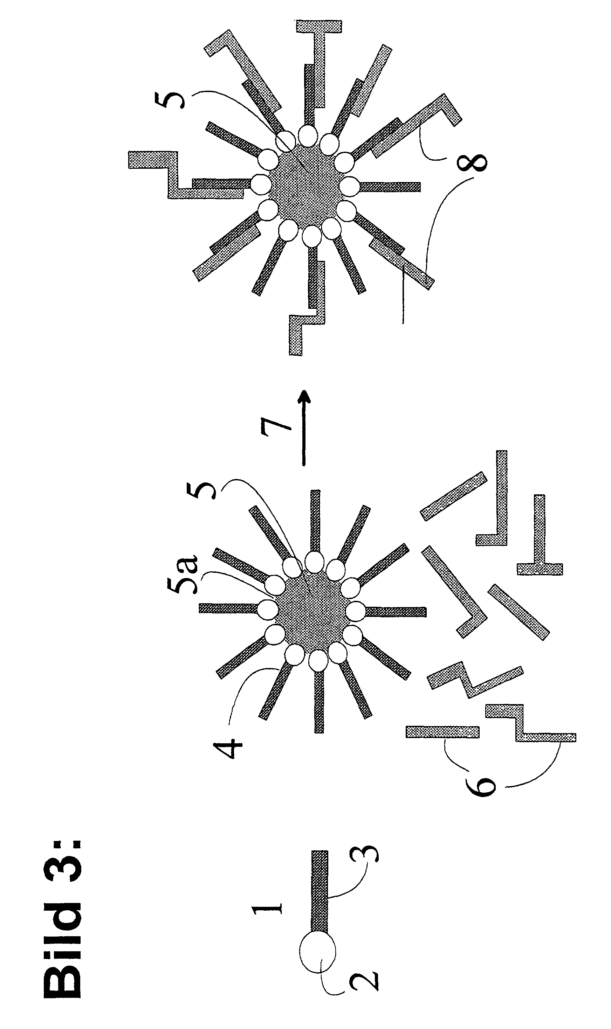

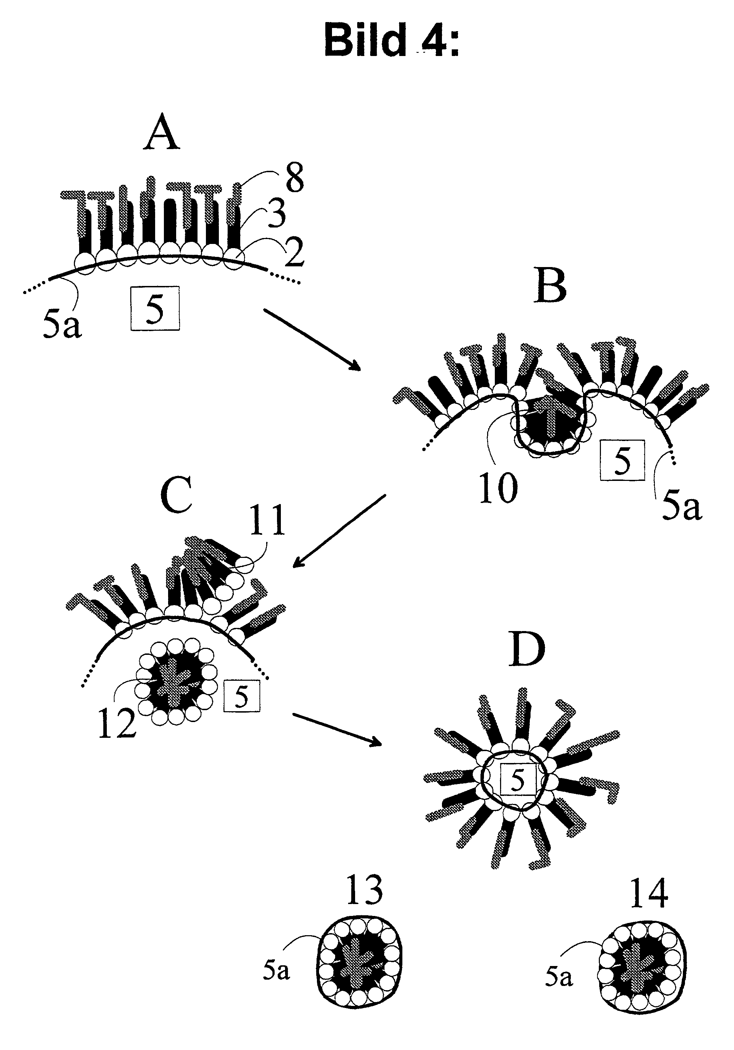

10) Bildung einer Mizelle im Tropfen
11) Beginnende Umgruppierung der Tendside aus dem Wasser heraus um die angelagerten Stoffe herum
12) Tensidmizelle, eingelagert in Wassertröpfchen
13) Im Luftraum gebildete Mizelle, Geruchsstoffe in Mizelle eingelagert, mit Wasserfilm
14) Abgetrocknete, zuvor Im Tropfen gebildete Mizelle, Geruchsstoffe in Mizelle eingelagert mit Wasserfilm
2), 3), 5) 5A)und 8) wie für Abbildung 3.

### Beispiele

Das Verfahren findet Anwendung in nahezu allen Bereichen der Abluftbehandlung. Abluft, z.B. aus Verbrennungs- oder Fäulnisprozessen (z.B. Kläranlagen, Kompostdeponien) enthält in der Regel eine Vielzahl unterschiedlicher organischer Moleküle, mit stark unterschiedlicher Hydrophilie und Polarität. Hydrophile Moleküle werden von der Wasserphase absorbiert, hydrophobe Moleküle mittels des amphiphilen Vehickels, an das sie über Wechselwirkungen an das wässrige Nebeltröpfchen gebunden werden aus der Luftmasse entfernt werden. Diese Aufgabe wird mit grenzflächenaktiven Tensiden gelöst. Das Einbringen des Nebels in den zu reinigenden Luftraum, geschieht durch den Einsatz von geeigneten Nebeldüsen und kann für jeden Anwendungsfall optimiert werden.
In einer besonderen Anwendung kommt das erfindungsgemäßen Verfahrens auch zur Reinigung von geruchsintensiven Emissionen aus Tierhaltung zum Einsatz. Das Verfahren kann die häufig zur Reinigung von organsich belasteter Abluft verwendeten Biofilter vollständig ersetzen.

## Patentansprüche

1. Verfahren zur Adsorption von hydrophoben Gaskomponenten und/oder Aerosolen aus einer Gasphase mittels schwebefähiger Flüssigkeitstropfen, das **dadurch gekennzeichnet ist, dass**
(a) die Ausbringung eines mit geeigneten Tensiden versehenen und schwebefähigen Flüssigkeitsnebels in den zu behandelnden Reaktionsraum erfolgt und,
(b) daß die zu bindenden hydrophoben Gaskomponenten und/oder die Aerosole an den Tensiden auf der Oberfläche der Flüssigkeitsnebeltropfen adsorbiert werden, und
wobei Flüssigkeitsnebeltropfen mit einem Tensidanteil von 0,01 bis 2 Promille, vorzugsweise 0,1 bis 2 Promille in der Gesamtvorlage Wasser verwendet werden.

2. Verfahren gemäß Anspruch 1, das **dadurch gekennzeichnet ist, daß** mindestens ein Tensid oder eine Mischung mehrerer Tenside aus den Stoffgruppen:
Fettalkoholpolyglykolether, Alkylphenolpolyglykolether, Fettsäurepolyglykolester, Fettsäureamidpolyglykolether, Fettsäurealkyloamide, Fettalkohol-Ethylenoxid-Propylenoxid-Addukte, Glycerid-Ethoxilate, Sorbitanester-Ethoxilate, APG-Alkylpolyglykoside
verwendet wird.

3. Verfahren gemäß Anspruch 1 oder 2, **dadurch gekennzeichnet, daß** die zu adsorbierenden Gaskomponenten geruchsbelästigende Stoffe sind.

4. Verfahren gemäß einem der Ansprüche 1 - 3, **dadurch gekennzeichnet, daß** es sich bei den zu adsorbierenden Aerosolen um biologische und/oder mineralische Feststoffe handelt.

5. Verfahren gemäß einem der Ansprüche 1 - 4, **dadurch gekennzeichnet, daß** es sich bei den zu adsorbierenden Aerosolen um Sporen, Viren oder Bakterien handelt.

6. Verfahren gemäß einem der Anspruche 1 - 5, **dadurch gekennzeichnet, daß** bevorzugt eines der folgenden Tenside bzw. eine Mischung der folgenden Tenside verwendet wird: verzweigter Isotridecylalkohol mit 9 Mol Ethylenoxid, verzweigter C9- bis C11-Fettalkohol mit 8 Mol Ethylenoxid, hydriertes Rizinusöl mit 40 Mol Ethylenoxid.

7. Verfahren gemäß einem der Ansprüche 1 - 6, dadurch gekenzeichnet, daß die Flüssigkeitsnebeltropfen einen sauren oder alkalischen pH-Wert aufweisen.

8. Verwendung einzelner Tenside oder Tensidmischungen der Stoffgruppen: Fettalkoholpolyglykolether, Alkylphenolpolyglykolether Fettsäurepolyglykolester, Fettsäureamidpolyglykolether, Fettsäurealkyloamide, Fettalkohol-Ethylenoxid- Propylenoxid-Addukte, Glycerid-Ethoxilate, Sorbitanester-Ethoxilate, APG-Alkyl-poyglylkoside in einem Verfahren gemäß einem der Ansprüche 1 bis 7.

9. Verwendung eines Verfahrens gemäß einem der Ansprüche 1 - 7 zur Reinigung von Abluft.

10. Verwendung eines Verfahrens gemäß einem der Ansprüche 1 - 7 zur Adsorption geruchsbelästigender Stoffe.

## Claims

1. Process for the adsorption of hydrophobic gas components and/or aerosols from a gaseous phase by means of liquid droplets capable of floating, that is **characterized in that**
(a) a liquid fog capable of floating and provided with suitable tensides is placed into the reaction room to be treated, and
(b) that the hydrophobic gas components and /or the aerosols to be bound are adsorbed to the tensides on the surface of the liquid fog droplets, and
wherein liquid fog droplets with a tenside content of 0,01 to 2 per mill, preferably 0,1 to 2 per mill are used in the total receiving water.

2. Process according to claim 1, **characterized in that** at least one tenside or a mixture of several tensides selected from the substance groups:
fatty alcohol polyglycolether, alkyl phenol polyglycolether, fatty acid polyglycolester, fatty acid amide polyglyolether, fatty acid alkyloamide, fatty alcohol-ethyleneoxide-propyleneoxide-adducts, glyceride ethoxilate, sorbitane ester ethoxilate, APG-alkylpolyglycoside
is used.

3. Process according to claim 1 or 2, **characterized in that** the gas components to be adsorbed are odorously annoying substances.

4. Process according to one of claims 1 - 3, **characterized in that** the aerosols to be adsorbed are biological and/or mineral solids.

5. Process according to one of claims 1 - 4, **characterized in that** the aerosols to be adsorbed are spores, viruses or bacteria.

6. Process according to any one of claims 1 - 5, **characterized in that** preferably one of the following tensides or a mixture of the following tensides is used: branched isotridecylalcohol with 9 moles ethylenoxide, branched C9 to C11-fatty alcohol with 8 moles ethylenoxide, hydrated castor oil with 40 moles ethylenoxide.

7. Process according to one of claims 1 - 6, **characterized in that** the liquid fog droplets have an acidic or alkaline pH.

8. Use of single tensides or tenside mixtures of the following substance groups: fatty alcohol polyglycolether, alkyl phenol polyglycolether, fatty acid polyglycolester, fatty acid amide polyglyolether, fatty acid alkyloamide, fatty alcohol-ethyleneoxide-propyleneoxide-adducts, glyceride ethoxilate, sorbitane ester ethoxilate, APG-alkylpolyglycoside in a process according to one of claims 1-7.

9. Use of a process according to one of claims 1 - 7 for purifying exhaust air.

10. Use of a process according to any one of claims 1 - 7 for the adsorption of odorously annoying substances.

## Revendications

1. Procédé pour l'absorption de composants gazeux hydrophobes et/ou aérosols d'une phase gazeuse, moyennant de gouttes liquides en suspense **caractérisé par**,
(a) l'évacuation d'un brouillard liquide en suspens muni de tensioactif appropriées dans l'espace à traiter,
(b) les composants gazeux hydrophobes à lier et/ou les aérosols sont absorbés sur les tensioactif à la surface des gouttes de brouillard liquide
ou sont utilisés les gouttes de brouillard liquide avec un proportion de tensioactif de 0,01 à 2 pro mille ou de préférence de 0,1 à 2 pro mille dans la totalité de l'eau.

2. Procédé d'après revendication 1, **caractérisé par le fait que** au moins un tensioactif ou un mélange de plusieurs tensioactifs composé de alcool gras de polyglycol ether, phenol alkylique de polyglycol ether, acide gras de polyglycol ester, acide gras d'amidopolyglycol ether, acide gras d'alkyloamide, adduit de alcool gras-oxyde d'ethylene-oxyde de propylene, ethylate de glyceride, ethylate d'ester de sorbitan, polyglycoside d'alkyl de APG, sont utilisés.

3. Procédé d'après revendication 1 ou 2, **caractérisé par le fait que** les composants gazeux sont des matières incommodant l'odeur.

4. Procédé selon une des revendication 1 - 3 **caractérisé par le fait que** les aérosols à absorber sont des matières grasses mineralogique et/ou biologique.

5. Procédé selon une des revendication 1 -4 les aérosols à absorber sont des spores, virus ou bactéries.

6. Procédé selon une des revendication 1 - 5 **caractérisé par le fait que** de préférence une des tensioactif suivante respectivement un mélange de tensioactifs suivant sont utilisés : alcool d'isotridécyle ramifié avec 9 Mol d'oxyde d'éthylene, alcool gras ramifié en C9 à C11 avec 8 Mol d'oxyde d'éthylene, huile de ricin hydratée avec 40 Mol d'oxyde d'éthylene.

7. Procédé selon une des revendication 1 - 5 **caractérisé par le fait que** les gouttes de brouillard liquide présentent un PH acide ou alcalin.

8. Utilisation de tensioactifs particuliers ou mélange de tensioactifs des matières : alcool gras de polyglycol ether, phenol alkylique de polyglycol ether, acide gras de polyglycol ester, acide gras d'amidopolyglycol ether, acide gras d'alkyloamide, adduit de alcool gras-oxyde d'ethylene-oxyde de propylene, ethylate de glyceride, ethylate d'ester de sorbitan, polyglycoside d'alkyl de APG dans un procédé selon revendication 1.

9. Emploi d'un procédé selon une des revendications 1 - 7 pour le nettoyage de l'air usé.

10. Emploi d'un procédé selon une des revendications 1 - 7 pour l'absorption de matières malodorantes.
